# EUROPÄISCHE PATENTANMELDUNG

(11) **EP 3 246 119 A1**
(43) Veröffentlichungstag der Anmeldung: **22.11.2017**
(21) Anmeldenummer: 16170119.8
(22) Anmeldetag: 18.05.2016
(51) Int. Cl.: B23B 31/16, B23B 31/28, B23Q 1/00

(54) **ANTRIEBSVORRICHTUNG, INSBESONDERE FÜR EIN SPANNFUTTER**

(71) Anmelder: SMW-AUTOBLOK Spannsysteme GmbH, 88074 Meckenbeuren (DE)
(72) Erfinder: MAURER, Eckhard, 88094 Oberteuringen (DE)
(74) Vertreter: Engelhardt & Engelhardt

(57) **Zusammenfassung**

Bei einer Antriebsvorrichtung (1), insbesondere für ein Spannfutter (8) zur lageorientierten Abstützung eines Werkstückes (2),
bestehend aus einem Gehäuse (3), mindestens einem Druckstück (4), das axial oder radial in dem Gehäuse (3) beweglich gelagert ist, mindestens einem Elektromotor (5), der oder die trieblich mit dem Druckstück (4) verbunden ist bzw. sind, einer Energieaufnahmeeinrichtung (11), die elektrisch mit dem Elektromotor (5) gekoppelt ist und einer außerhalb der Antriebsvorrichtung angeordneten Energieübertragungseinrichtung (12), durch die berührungslos an die Energieaufnahmeeinrichtung (11) Energie für den Betrieb des Elektromotors (5) zur Verfügung gestellt ist, soll ein der Antriebsvorrichtung (1) zugeordneter Elektromotor (5) schaltgetriebefrei in mindestens zwei unterschiedlichen Bewegungsarten, beispielsweise für ein Spannfutter betrieben sein, um zum einen eine möglichst schnelle Zustellung der Druckstücke (4) und zum anderen eine maximale Spannkraft der Druckstücke (4) auf die Oberfläche des einzuspannenden Werkstückes (2) zu erzeugen. Dies ist dadurch erreicht, dass mittels einer Steuereinrichtung (21) die Bewegungsgeschwindigkeit des oder der Druckstücke (4) überwacht ist, und dass in Abhängigkeit von der Position der jeweiligen Druckstücke (4) bezogen auf den Wirkkontakt mit dem einzuspannenden Werkstück (2) die Drehzahl mit Hilfe der Steuereinrichtung und der Bestromung einer Wicklung (6) des Elektromotors (5) verändert ist.

## Beschreibung

Die Erfindung betrifft eine Antriebsvorrichtung, insbesondere für ein Spannfutter zur lageorientierten Abstützung eines Werkstückes nach dem Oberbegriff des Patentanspruches 1.

Aus der DE 3629453 A1 ist beispielsweise eine elektromechanische Vorrichtung zum Erzeugen einer Axialkraft für die Betätigung von Spannzeugen zu entnehmen. Durch die Vorrichtung soll eine Axialkraft erzeugt sein, durch die die Betätigung von Spindeln einer Werkzeugmaschine erfolgt, durch die nachfolgend ein Spannfutter, das mindestens drei Spannbacken oder Druckstücke aufweist, angetrieben werden sollen. Die Spannbacken bzw. Druckstücke sind dabei radial in dem Spannfutterkörper geführt gelagert und bewegen sich demnach in Richtung auf das einzuspannende Werkstück zu oder von diesem weg.

Während die Werkzeugmaschine rotiert, um das Werkstück, beispielsweise mittels eines Fräsers oder dergleichen, bearbeiten zu können, ist die elektromechanische Vorrichtung gesperrt, um mögliche Bewegungen der Spannbacken zu verhindern, durch die der Spannzustand des Werkstückes möglicherweise aufgehoben ist.

Des Weiteren ist der elektromechanischen Vorrichtung ein Elektromotor mit einer Stator und einem Rotor zugeordnet, durch den die Antriebskraft erzeugt ist und auf einem Stirnradgetriebe zur Rotation der Spindel weitergeleitet ist.

Als nachteilig bei diesem Stand der Technik hat sich herausgestellt, dass die Energieübertragung zwischen der elektromechanischen Vorrichtung und einer Stromquelle problematisch zu bewerkstelligen ist, denn die Werkzeugmaschine ist während der Bestückungsphase stillzusetzen und rotiert während des Bearbeitungszustandes, so dass eine Energieversorgung des Elektromotors während des Betriebszustandes der Werkzeugmaschine nicht bzw. lediglich mit einer sehr geringen Spannung bewerkstelligt werden kann.

Es ist zwar bekannt, die Energieübertragung von einer Stromquelle mittels einer induktiv arbeitenden Energieübertragungseinrichtung zu bewerkstelligen, jedoch kann durch diese lediglich eine sehr geringe Leistung zur Verfügung gestellt sein, die nicht ausreicht, den Elektromotor mit einer derart hohen Drehzahl zu betreiben, dass die Rotationsgeschwindigkeit der Spindel bzw. die Zustellgeschwindigkeit der Spannbacken oder Druckstücke ohne wesentliche zeitliche Verzögerung erfolgt. Vielmehr weisen die bekannte Elektromotoren entweder eine hohe Drehgeschwindigkeit auf oder die Drehzahl der Elektromotoren ist gering und das zur Verfügung gestellte Drehmoment hoch.

Dieser Nachteil, dass während der Zustellphase der Druckstücke und der Haltephase der Drückstücke an der Oberfläche des einzuspannenden Werkstückes unterschiedliche Betriebsweisen für den Elektromotor erforderlich sind, wird bislang dadurch gelöst, dass die Stromversorgung des Elektromotors im Stillstands-Zustand der Werkzeugmaschine mittels elektrischen Steckverbindungen erreicht ist, durch die eine wesentlich höhere Leistungsaufnahme für den jeweiligen Elektromotor vorliegt, so dass dessen Drehzahl entsprechend hoch eingestellt sein kann, um die Zustellgeschwindigkeit der Druckstücke zu maximieren und damit die zeitlichen Verzögerungen für das Ein- und Ausspannen der Werkstücke möglichst gering zu halten.

Solche elektrischen Steckverbindungen sind jedoch nachteiligerweise äußerst störanfällig, da innerhalb der Werkzeugmaschine erhebliche Verschmutzungen durch Öl, Späne und andere Fremdpartikel auftreten, durch die Kontaktaufnahme der elektrischen Steckverbindung behindert oder gar gestört werden können. Zudem sind solche Steckverbindungen oftmals manuell oder halbautomatisch zu betreiben, so dass erhebliche zeitliche Verzögerungen entstehen, um die Steckverbindung herzustellen und nach der Bestückungsphase wieder zu lösen.

Es ist daher Aufgabe der Erfindung, eine Antriebsvorrichtung der eingangs genannten Gattung derart weiterzubilden, dass ein der Antriebsvorrichtung zugeordneter Elektromotor schaltgetriebefrei in mindestens zwei unterschiedlichen Bewegungsarten , beispielsweise für ein Spannfutters, zur Verfügung gestellt ist, um zum einen eine möglichst schnelle Zustellung der Druckstücke und zum anderen eine maximale Spannkraft der Druckstücke auf die Oberfläche des einzuspannenden Werkstückes zu erzeugen, wobei die Leistung der Antriebsvorrichtung möglichst gering und für beide Bewegungsarten konstant sein soll, um die induktive Energieversorgung der Elektromotoren zu ermöglichen.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass mittels einer Steuereinrichtung die Bewegungsgeschwindigkeit des oder der Druckstücke überwacht ist, und dass in Abhängigkeit von der Position der jeweiligen Druckstücke bezogen auf den Wirkkontakt mit dem einzuspannenden Werkstück die Drehzahl mit Hilfe der Steuereinrichtung und der Bestromung einer Wicklung des Elektromotors verändert ist, ist gewährleistet, dass die Druckstücke, insbesondere Spannbacken von Spannfuttern während des Einspannvorganges schnell in Richtung des Werkstückes bewegt werden können, und zum anderen dass die Druckstücke mit einer ausreichend hohen Spannkraft auf die Oberfläche des Werkstückes gedrückt bzw. festgesetzt sind, um dieses zuverlässig während der Rotationsphase der Werkzeugmaschine zu halten.

Während der Bewegung der Druckstücke, also bevor diese auf die Oberfläche des Werkstückes auftreffen, ist nämlich eine rasche Bewegung notwendig, die keinerlei bzw. nahezu keine Kräfte benötigt und wenn die Druckstücke auf die Oberfläche des Werkstückes auftreffen, ist eine hohe Spannkraft mit einer äußerst geringen Bewegungsmöglichkeit der Druckstücke notwendig. Da der Elektromotor eine Wicklung, die als Stator vorgesehen ist, aufweist, und die Wicklungen mindestens zweier elektrische Ableitungen versehen sind, kann der jeweilige Betriebszustand durch die Steuereinrichtung ausgewertet werden, um die Anzahl der Wicklungen des Elektromotors entsprechend zu bestromen. Durch die Reduzierung der Wicklungen bleibt nämlich die Leistungsaufnahme des Elektromotors konstant und gleichzeitig wird dessen Drehzahl reduziert, wodurch sich das Drehmoment des Elektromotors erhöht, um die entsprechend notwendige Spannkraft, die auf die Oberfläche des Werkstückes einwirkt, aufzubringen. Sobald die Druckstücke oder Spannbacken auf das Werkstück bzw. von diesem wegzubewegen sind, ist die Anzahl der Wicklungen des Stators verdoppelt, wodurch erreicht ist, dass sich die Drehzahl erhöht und das Drehmoment verringert.

Vorteilhafterweise kann die Antriebsvorrichtung als Flansch ausgebildet sein, um dieses über die Spindel trieblich mit einer Keilstange des Spannfutters zu koppeln, wodurch die Spannbacken durch eine axiale Zustellbewegung des Antriebsflansches radial im Raum bewegt sind. Die Antriebsvorrichtung kann jedoch ebenso unmittelbar im Gehäuse des Spannfutters angeordnet sein und steht trieblich jeweils mit einer der Spannbacken in Verbindung.

Durch die induktive Energieübertragung von einer außerhalb des Gehäuses der Antriebsvorrichtung angeordneten Energieübertragungseinrichtung auf eine innerhalb des Gehäuses der Antriebsvorrichtung vorgesehenen Energieaufnahmeeinrichtung ist unabhängig von dem Betriebszustand der Werkzeugmaschine eine entsprechend ausreichend groß bemessene Energie zur Verfügung gestellt, durch die der jeweilige Elektromotor und die zur Überwachung des Betriebszustandes und der Position des Spannfutters notwendigen Sensoren mit ausreichender Energie versorgt sind.

In der Zeichnung sind zwei erfindungsgemäße Ausführungsbeispiele einer Antriebsvorrichtung dargestellt, die nachfolgend näher erläutert sind. Im Einzelnen zeigt:
- Figur 1a: ein erstes Ausführungsbeispiel einer Antriebsvorrichtung, durch die eine axiale Zustellkraft auf ein Spannfutter erzeugt ist mit einem Elektromotor, einer elektrisch mit dem Elektromotor gekoppelten Energieaufnahmeeinrichtung sowie einer Energieübertragungseinrichtung, die außerhalb der Antriebsvorrichtung angeordnet ist, in perspektivischer Ansicht mit einem Ausbruch,
- Figur 1b: ein zweites Ausführungsbeispiel einer Antriebsvorrichtung, die in einem Spannfutter angeordnet ist und die jeweils mit einer radial in dem Spannfutter beweglich gelagerten Spannbacken bzw. Druckstück gekoppelt ist, mit einer Energieaufnahmeeinrichtung im Inneren des Spannfutters, die elektrisch mit dem jeweiligen Elektromotor verbunden ist und mit einem außerhalb des Spannfutters vorgesehenen Energieübertragungseinrichtung, in einer perspektivischen Ansicht und teilweise aufgebrochen,

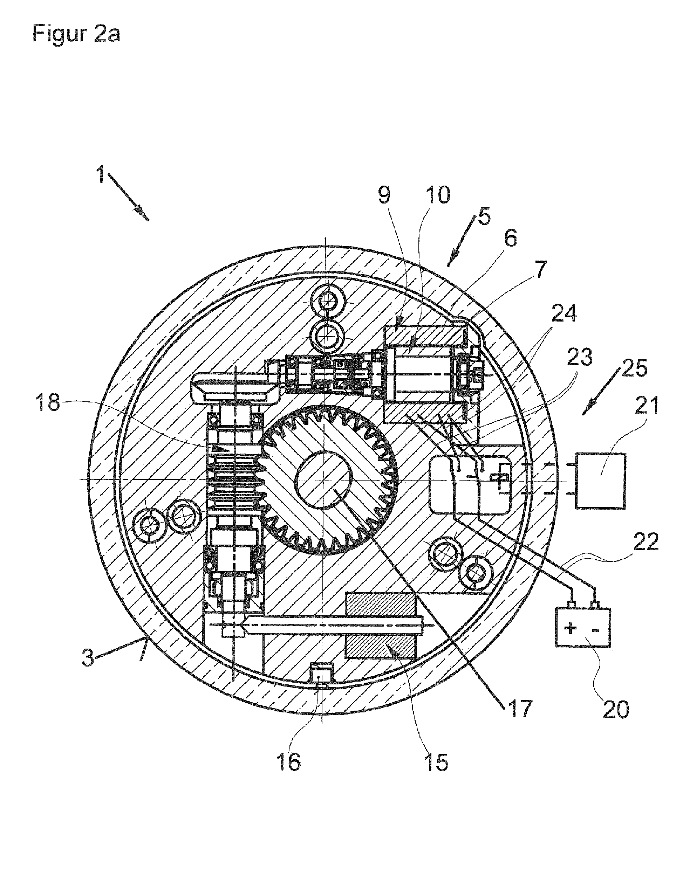

- Figur 2a: die Antriebsvorrichtung gemäß Figur 1a, entlang der Schnittlinie IIa-IIa,

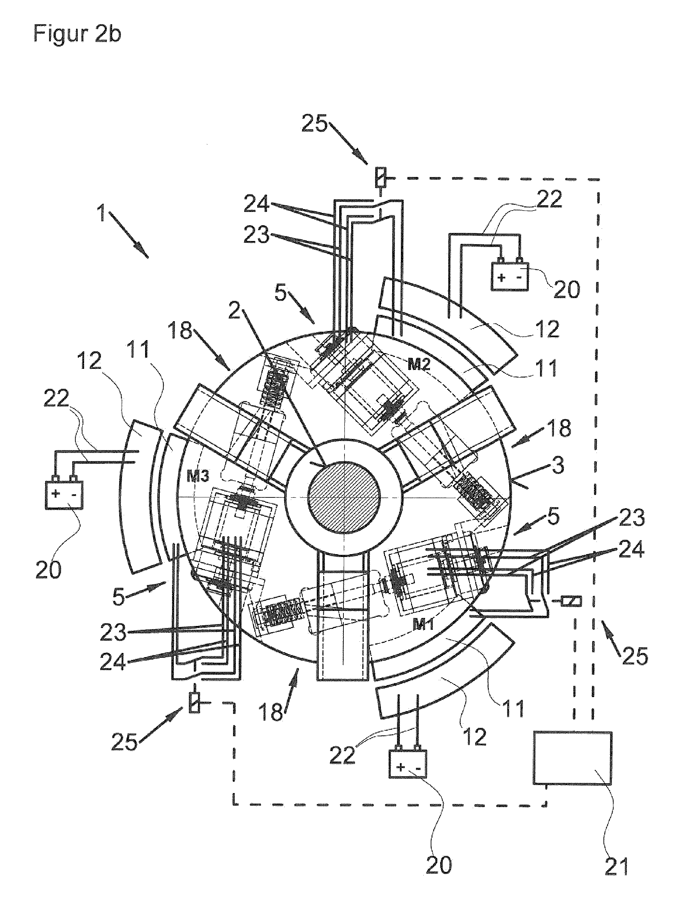

- Figur 2b: das Spannfutter gemäß Figur 1b entlang der Schnittlinie IIb-IIb,
- Figur 3a: der elektrische Aufbau eines der Elektromotoren gemäß Figur 1a,
- Figur 3b: der konstruktive Aufbau des Elektromotors gemäß Figur 1b mit einem elektrischen Schaltbild,
- Figur 4a: die elektrische Schaltung zur Ansteuerung des Elektromotors gemäß Figur 1a, sowie die entsprechenden Drehzahl- und Drehmomentsveränderungen des Elektromotors während der jeweiligen Betriebsweise und
- Figur 4b: das elektrische Schaltbild des Elektromotors gemäß Figur 1 b sowie die Drehzahl- und Drehmomentsveränderungen des Elektromotors während der jeweiligen eingestellten Betriebsweise.

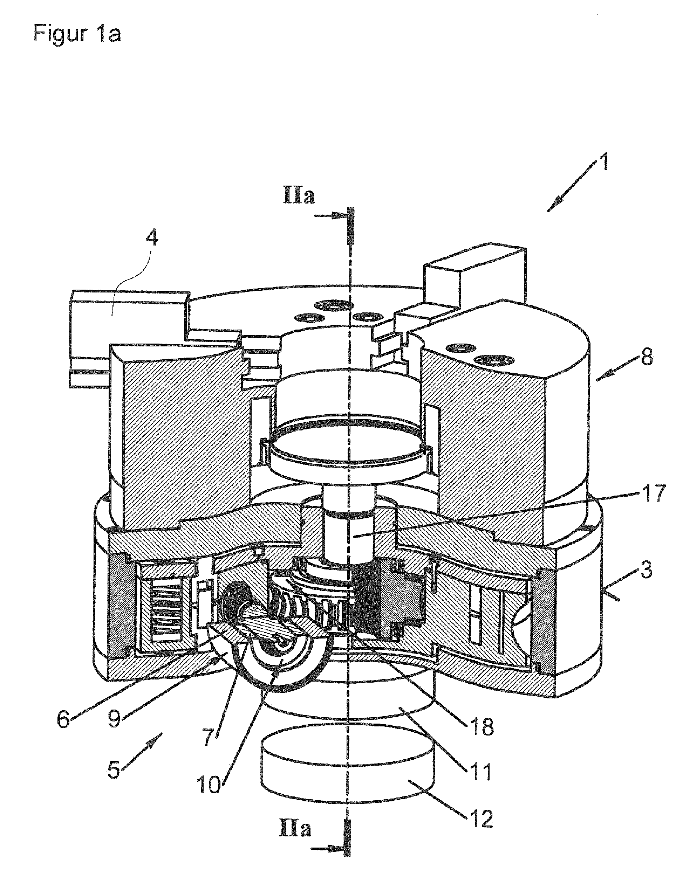

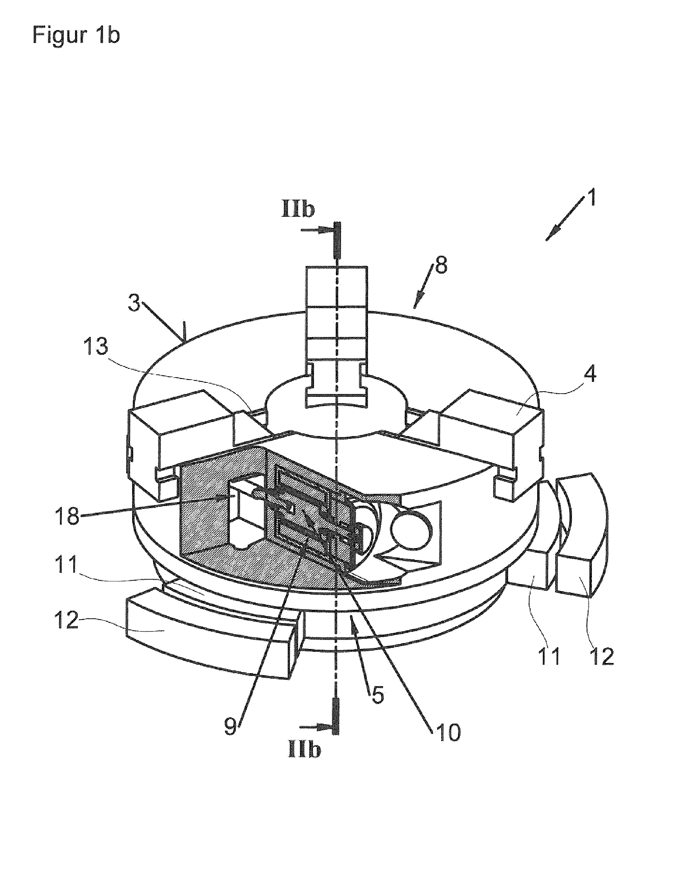

Aus den Figuren 1 a und 2a ist ersichtlich, dass eine Antriebsvorrichtung 1 eine axiale Zustellkraft erzeugt, durch die beispielsweise eine Keilstange 14 eines Spannfutters 8 angetrieben werden kann. Die Antriebsvorrichtung 1 ist dabei als Flansch ausgebildet und kann mit einer beliebig ausgestalteten Spannvorrichtung gekoppelt werden. Durch die Spannvorrichtung bzw. das Spannfutter 8 soll ein Werkstück 2 lageorientiert an einer nicht dargestellten Werkzeugmaschine gehalten werden. Während der Bestückungsphase der Werkzeugmaschine steht diese still, so dass das Werkstück 2 ausgewechselt werden kann. Zur Bearbeitung des Werkstückes 2 ist die Werkzeugmaschine in eine vorgegebene Rotation zu überführen, so dass beispielsweise die Oberfläche des Werkstückes 2 mittels eines Fräsers, Drehers oder Bohrers bearbeitet werden kann.

Die Antriebsvorrichtung 1 weist ein Gehäuse 3 auf und dem Spannfutter 8 sind mindestens 3 Spannbacken oder Druckstücke 4 zugeordnet, die in dem Gehäuse 3 des Spannfutters 8 radial in Führungsnuten 13 beweglich gelagert sind. Die Druckstücke 4 sind dabei trieblich mit der Keilstange 14 verbunden, so dass durch die axiale Zustellbewegung Keilstange 14 eine synchrone Bewegung der drei Spannbacken bzw. der Druckstücke 4 erfolgt.

Darüber hinaus ist der Antriebsvorrichtung 1 ein Elektromotor 5 zugeordnet, der eine Wicklung 6 mit einer Vielzahl von Umwicklungen aufweist, die an dem Stator 9 des Elektromotors 5 angeordnet sind. Des Weiteren besteht der Elektromotor 5 aus einem mit einer Vielzahl von Dauermagneten 7 versehenen Rotor 10, der umlaufend um den Stator 9 angeordnet ist und der über Getriebemittel 18 mit einer Spindel 17 gekoppelt ist, die fluchtend zu der Symmetrieachse der Antriebsvorrichtung 1 verläuft. Die Spindel 17 steht dabei in trieblicher Wirkverbindung mit der Keilstange 14, so dass durch die Umdrehung der Spindel 17 die radiale Bewegung der Keilstange 14 herbeigeführt ist.

Zur Energieversorgung des Elektromotors 5 ist im Inneren des Gehäuses 3 der Antriebsvorrichtung 1 eine Energieaufnahmeeinrichtung 11 vorgesehen, die elektrisch mit dem Elektromotor 5 gekoppelt ist. Außerhalb des Gehäuses 3 der Antriebsvorrichtung 1 ist eine Energieübertragungseinrichtung 12 angeordnet, die kontakt- bzw. berührungslos, insbesondere induktiv, Energie an die Energieaufnahmeeinrichtung 11 überträgt. Die Energieübertragung erfolgt dabei völlig unabhängig von dem Betriebszustand der Werkzeugmaschine. Es ist nämlich durch die Energieübertragungseinrichtung 12 gewährleistet, dass eine konstante Leistung von beispielsweise etwa 500 Watt permanent von der Energieübertragungseinrichtung 12 an die Energieaufnahmeeinrichtung 11 zur Verfügung gestellt ist; die Energieübertragungseinrichtung 11 bezieht die erforderliche Energie aus einer Stromquelle 20.

In Figur 1b ist gezeigt, dass die Antriebsvorrichtung 1 unmittelbar in dem Gehäuse 3 des Spannfutters 8 angeordnet ist und dass jeder der drei Spannbacken bzw. Druckstücke 4 mit einem der Elektromotoren 5 trieblich gekoppelt ist. Jeder der Elektromotoren 5 treibt demnach ein Druckstück 4 an und stellt dieses in Richtung des einzuspannenden Werkstücks 2 zu bzw. bewegt dieses von dem Werkstück 2 weg.

Sobald das jeweilige Druckstück 4 in Wirkkontakt mit dem Werkstück 2 gelangt, soll der Betriebszustand des Elektromotors 5 verändert werden. Für die Bewegungen der Druckstücke 4 werden nämlich hohe Zustellgeschwindigkeiten gefordert, um den Einspannvorgang möglichst zeitlich kurz zu bemessen bzw. bewerkstelligen zu können. Anschließend soll das Werkstück 2 mit einer möglichst konstanten Haltekraft, die von dem jeweiligen Elektromotor 5 bzw. der Antriebseinrichtung 1 nach Figur 1 a zur Verfügung gestellt ist, auf die Oberfläche des Werkstückes 2 einwirken, um dieses möglichst zentriert im Raum zu halten.

Der Elektromotor 5 weist somit zwei Betriebsmodii, nämlich einen ersten Betriebsmodus für das schnelle Zustellen der Druckstücke 4 in Richtung der Werkstückes 2 und einen zweiten Betriebsmodus der bei annähernd gleicher Leistungsaufnahme die Spannkraft auf das Werkstück aufbringt oder vice versa. Die Spannkraft ist dabei proportional zu dem durch das durch den Elektromotor 5 aufgebrachte Drehmoment.

Um die Zuverlässigkeit bzw. die Betriebssicherheit des Spannfutters 8 zu verbessern, sind in dem Gehäuse 3 eine oder mehrere mechanische Verriegelungseinrichtungen 15 vorgesehen, die beispielsweise als Zapfen oder Bolzen ausgebildet sind und durch die die Spannbacken bzw. Druckstücke 4 in ihrer jeweiligen Halteposition festgesetzt sind. Die mechanischen Verriegelungseinrichtungen 15 werden mittels eines Sensors 16 überwacht. Sobald demnach einer der mechanischen Verriegelungseinrichtungen 15 seine vorgegebene Position, beispielsweise durch Verschleiß, nicht mehr einnehmen kann, liefert der Sensor 16 ein entsprechendes elektrisches Signal, das ausgewertet ist, um gegebenenfalls die Werkzeugmaschine stillzusetzen. Die elektrische Spannungsversorgung der jeweiligen Sensoren 16 erfolgt dabei über die Energieaufnahmeeinrichtung 11, die elektrisch mit dem jeweiligen Sensor 16 verbunden ist. Folglich stellt die Energieübertragungseinrichtung 12 und die Energieaufnahmeeinrichtung 11 sowohl für die Elektromotoren 5 als auch für die Sensoren 16 permanent eine entsprechend notwendige Spannung bzw. Energie zur Verfügung, wodurch die Betriebsweise sämtlicher elektrischen Bauteile im Inneren der Antriebsvorrichtung 1 gewährleistet ist.

In Figur 1a ist die Energieübertragungseinrichtung 12 als Platte ausgestaltet, die benachbart zu der Unterseite der Antriebsvorrichtung 1 angeordnet ist, wobei die Unterseite der Antriebsvorrichtung 1 gegenüberliegend zu dem Spannfutter 8 angebracht ist. Gemäß Figur 1b ist die Energieübertragungseinrichtung 12 als Ring oder Halbschale bzw. Teilring ausgestaltet, der seitlich neben dem Spannfutter 8 verläuft. Der Mittelpunkt der ringförmigen Energieübertragungseinrichtung 12 liegt demnach auf der Symmetrieachse des Spannfutters 8, wodurch das Spannfutter 8 im Inneren der Teilabschnitte des Ringes der Energieübertragungseinrichtung 12 angeordnet ist.

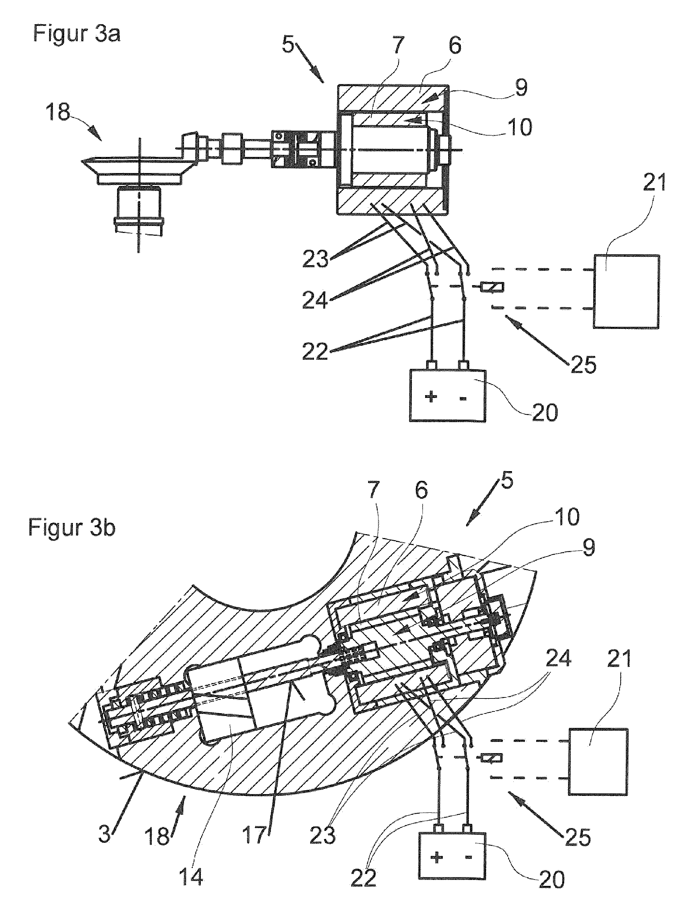

Aus den Figuren 3a und 3b ergibt sich die elektrische Ansteuerung des jeweiligen Elektromotors 5. Die Wicklung 6 des Elektromotors 5 weist eine elektrische Zuleitung 22 sowie eine erste und zweite elektrische Ableitung 23 bzw. 24 auf, die mittels einer Steuereinrichtung 21 und einem Schalter 25 je nach Betriebszustand bzw. Stellung des Druckstückes 4 geschaltet sind. Die erste Ableitung 23 ist dabei an einem Ende der Wicklung 6 und die zweite elektrische Ableitung 24 in der Mitte der Wicklung 6 angebracht. Durch die entsprechende Umschaltung zwischen der ersten und zweiten Ableitung 23 bzw. 24 wird demnach die Anzahl der Wicklungen 6 verändert. Durch die Steuereinrichtung 21 ist der Bewegungszustand bzw. die Position der jeweiligen Druckstücke 4 überwacht. Sind die Druckstücke 4 in Richtung des Werkstückes 2 zu bewegen, benötigt der Elektromotor 5 eine hohe Drehgeschwindigkeit und ein geringes Drehmoment, so dass die gesamte Anzahl von Wicklungen 6 zu bestromen ist, um diesen Betriebszustand des Elektromotors 5 zu erreichen. Durch den Elektromotor 5 sind demnach in diesem Betriebszustand hohe Drehgeschwindigkeiten zur Verfügung gestellt, durch die der mit Dauermagneten 7 versehene Rotor 10 eine hohe Drehzahl erfährt, durch die dann die Bewegungsgeschwindigkeiten der Druckstücke 4 eingestellt sind.

Erreicht das jeweilige Druckstück 4 die Oberfläche des einzuspannenden Werkstückes 2, benötigt das Spannfutter 8 eine hohe Haltekraft bei einer sehr geringen Zustellbewegung, so dass dieser Betriebszustand durch die Steuereinrichtung 21 erfasst ist und der Schalter 25 zwischen der ersten zur zweiten Ableitung 23 bzw. 24 umgelegt wird. Durch das Umschalten wird die Anzahl der bestromten Wicklungen 6 des Elektromotors 5 halbiert, so dass sich die Drehgeschwindigkeit des Elektromotors bzw. des Rotors 10 verringert und gleichzeitig das Drehmoment des Rotors 10 bzw. des Elektromotors 5 gesteigert ist, und zwar unter Beibehaltung der aufgenommenen Leistung von etwa 500 Watt durch die Energieübertragungseinrichtung 11.

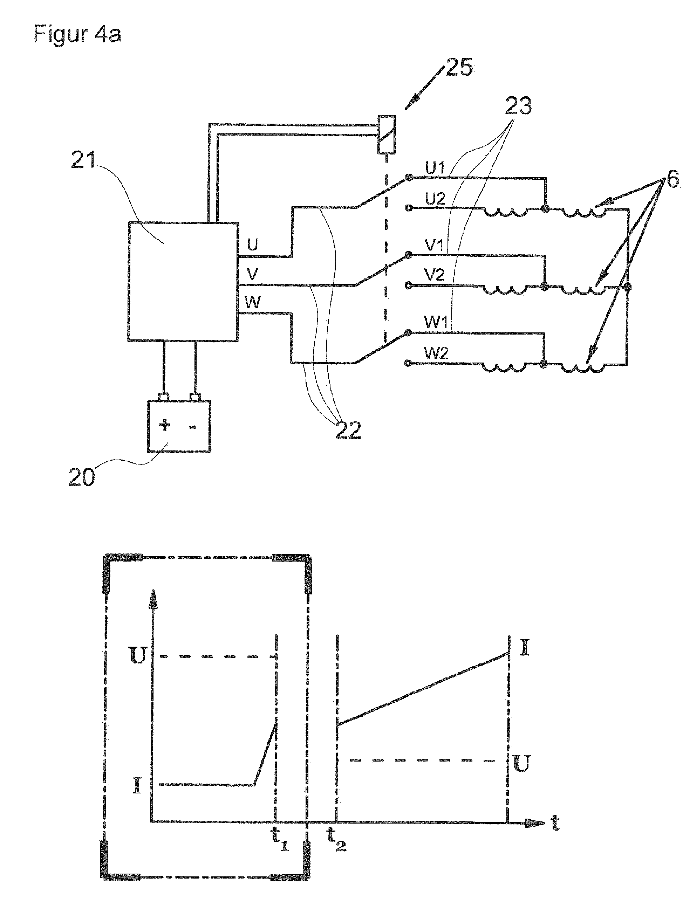

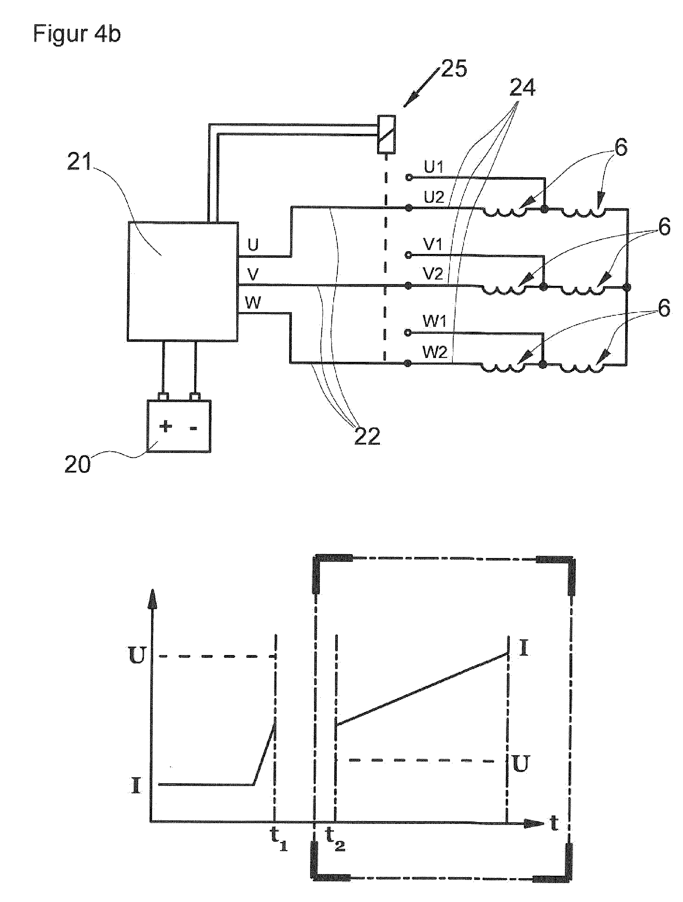

Sobald die notwendige Haltekraft durch den oder die Elektromotoren 5 aufgebracht ist, kann entweder der jeweilige Elektromotor 5 abgeschaltet sein, so dass dann die mechanischen Verriegelungseinrichtungen 15 die Druckstücke 4 in ihrer vorgegebenen Position fixieren oder die jeweiligen Elektromotoren 5 werden weiterhin bestromt, um die notwendige Haltekraft zur Verfügung zu stellen. Die entsprechenden Schaltbilder können den Figuren 4a bzw. 4b entnommen werden, aus denen auch ersichtlich ist, für welche Schaltvorgänge welche Drehzahlen bzw. Drehmomente von dem jeweiligen Elektromotor 5 durch die Bestromung der gesamten Wicklung 6 bzw. der Bestromung der halben Wicklung 6 vorliegt.

Der Elektromotor 5 kann ohne weiteres auch als weitgehend verschleißfrei ausgestaltet sein, wobei die Dauermagneten den Rotor 10 des Elektromotors 5 bilden und die Wicklung 6 bzw. die Spulen den Stator 9.

## Patentansprüche

1. Antriebsvorrichtung (1), insbesondere für ein Spannfutter (8) zur lageorientierten Abstützung eines Werkstückes (2),
bestehend aus:
- einem Gehäuse (3),
- mindestens einem Druckstück (4), das axial oder radial in dem Gehäuse (3) beweglich gelagert ist,
- mindestens einem Elektromotor (5), der oder die trieblich mit dem Druckstück (4) verbunden ist bzw. sind,
- einer Energieaufnahmeeinrichtung (11), die elektrisch mit dem Elektromotor (5) gekoppelt ist und
- einer außerhalb der Antriebsvorrichtung angeordneten Energieübertragungseinrichtung (12), durch die berührungslos an die Energieaufnahmeeinrichtung (11) Energie für den Betrieb des Elektromotors (5) zur Verfügung gestellt ist, **dadurch gekennzeichnet,**
**dass** mittels einer Steuereinrichtung (21) die Bewegungsgeschwindigkeit des oder der Druckstücke (4) überwacht ist, und dass in Abhängigkeit von der Position der jeweiligen Druckstücke (4) bezogen auf den Wirkkontakt mit dem einzuspannenden Werkstück (2) die Drehzahl mit Hilfe der Steuereinrichtung und der Bestromung einer Wicklung (6) des Elektromotors (5) verändert ist.

2. Antriebsvorrichtung nach Anspruch 1,
**dadurch gekennzeichnet,**
**dass** die Energieaufnahme und der Energieverbrauch des jeweiligen Elektromotors (5) unabhängig von der Bewegungsgeschwindigkeit bzw. der Position des oder der Druckstücke (4) konstant ist.

3. Antriebsvorrichtung nach Anspruch 1 oder 2,
**dadurch gekennzeichnet,**
**dass** der jeweilige Elektromotor (5) eine ein Magnetfeld erzeugende Wicklung (6) aufweist, die drehfest mit dem Elektromotor (5) verbunden ist und dass an einem die Wicklung (6) umschließenden Rotor (10) ein oder mehrere Dauermagnete (9) angeordnet sind, die durch die Bestromung der Wicklung (6) in eine vorgegebene Rotationsgeschwindigkeit versetzt sind und dass der Rotor (10) des Elektromotors (5) trieblich mit dem jeweiligen Druckstück (4) verbunden ist.

4. Antriebsvorrichtung nach Anspruch 3,
**dadurch gekennzeichnet,**
**dass** an der Wicklung (6) des Elektromotors (5) eine elektrische Zuleitung (22) und mindestens zwei elektrische Ableitungen (23, 24) vorgesehen sind, die elektrisch mit der Steuereinrichtung (21) gekoppelt sind und dass durch die Steuereinrichtung (21) ein Schaltvorgang erzeugt ist, durch den die erste oder die zweite elektrische Ableitung (23 oder 24) der Wicklung (6) des Elektromotors (5) freigeschaltet ist.

5. Antriebsvorrichtung nach einem der vorgenannten Ansprüche,
**dadurch gekennzeichnet,**
**dass** die Energieübertragung zwischen der Energieübertragungseinrichtung (12) und der Energieaufnahmeeinrichtung (11) mittels Induktivität erfolgt und dass die von der Energieübertragungseinrichtung (12) zur Verfügung gestellte Leistung etwa 500 Watt beträgt.

6. Antriebsvorrichtung nach einem der vorgenannten Ansprüche,
**dadurch gekennzeichnet,**
**dass** in der Antriebsvorrichtung (1) mechanisch betriebene Verriegelungseinrichtungen (15) vorgesehen sind, durch die die Bewegungsfreiheit des jeweiligen Druckstückes (4) im Spannzustand festgesetzt sind und dass die Positionen der Verriegelungseinrichtungen (15) mittels elektrisch betriebener Sensoren (16) während des Betriebszustandes der Antriebsvorrichtung (1) überwacht sind und dass die Sensoren (16) elektrisch mit der Energieaufnahmeeinrichtung (11) verbunden sind.

7. Antriebsvorrichtung nach einem der vorgenannten Ansprüche,
**dadurch gekennzeichnet,**
**dass** die Energieübertragungseinrichtung (12) als Ring oder Halbschale ausgestaltet ist und dass die Antriebsvorrichtung (1) im Inneren des Ringes oder benachbart zu der Halbschale angeordnet ist.

8. Antriebsvorrichtung nach einem der Ansprüche 1 bis 6,
**dadurch gekennzeichnet,**
**dass** die Energieübertragungseinrichtung (12) als Platte ausgestaltet ist und dass die Platte benachbart zu der Antriebsvorrichtung (1) angeordnet ist, vorzugsweise im Bereich gegenüberliegend zu dem an der Antriebsvorrichtung (1) angebrachten Druckstück (4).
